# EUROPEAN PATENT APPLICATION

(11) **EP 3 297 308 A1**
(43) Date of publication of application: **21.03.2018**
(21) Application number: 16306164.1
(22) Date of filing: 14.09.2016
(51) Int. Cl.: H04W 12/06, G06F 21/36, H04L 29/08

(54) **METHOD TO PROTECT NETWORK-BASED SERVICE PROVIDED BY A SERVICE PROVIDER**

(71) Applicant: Gemalto SA, 92190 Meudon (FR)
(72) Inventor: GARREAU, Eric, 13881 Gemenos Cedex (FR); FOKLE, Milas, 13881 Gemenos Cedex (FR)

(57) **Abstract**

The present invention relates to a method to protect a network-based service provided by a service provider (SP), said method comprising the step of sending a unique secret image (Cc,Qc) modified using a first human understandable modification element, said unique secret image (Cc,Qc) to be displayed to an end user for him to input a related one time secret (R(Cc),R(Qc)) on an acquisition device (UE), said method comprising the preliminary step to further randomize (Rand) the unique secret image (Cc,Qc) to be sent and displayed to the user using at least one second human understandable uniquely generated random element (RMD,Q) resulting of the remote procedure call and necessary to be understood to recover the related one time secret (R(Cc),R(Qc)), rendering the reloading possible but with another second human understandable random element (RMD,Q) when a request is twice presented.

## Description

### FIELD OF THE INVENTION

The present invention relates to a method to protect network-based service provided by a service provider, said method comprising the step of sending a unique secret image modified using a first human understandable modification element, said unique secret image to be displayed to an end user for him to input a related one time secret on an acquisition device.

More particularly, this invention concerns all web-based services which send a secret to the end-user, for instance a captcha, which can be tampered by an attacker as a Man in the Middle or a hacker of emitting server.

Even more particularly, the field of this invention is related to all uses-cases when a user needs to enter a secret code in order to authenticate on a service, in conjunction with another identification mean, and when a remote or local attacker is able to learn this secret code by observing it.

For instance, it could be:
- authenticate to your bank after entering the customer ID,
- unlock own mobile phone (self-identified mean),
- start a car without a car key after tapping with NFC phone,
- confirm identity after tapping a contactless ID or passport,

The invention also pertains to a secret injector server implementing the method of the invention, to a unique secret image as obtained according to the method of the invention and to a web page comprising such a unique secret image.

### BACKGROUND OF THE INVENTION

Currently, if the attacker can successfully inject a malicious script, e.g. javascript, content in the page, a browser will allow its execution and will grant some access to the page elements, typically a document model, according to the tampered Cross Origin Resource Sharing policy.

If the malicious script further connects to a Command And Control server, the remote attacker is able to access or modify to page contents, allowing to run prepared complex attacks like for the famous banking Zeus. For instance, stealing capcha images to be able to confirm a "local" human presence remotely. The attacker has thus full access to the challenge and can further perform malicious actions.

This invention allows to prevent this kind of attacks.

### SUMMARY OF THE INVENTION

The present invention aims at avoiding, or at least making more difficult the above-mentioned malicious attacks.

The present invention is defined, in its broadest sense, as a method as defined in preamble further comprising the preliminary step to further randomize the unique secret image to be sent and displayed to the user using at least a second human understandable uniquely generated random element resulting of the remote procedure call and necessary to be understood to recover the related one time secret, rendering the reloading possible but with another second human understandable random element when a request is twice presented.

The invention thus provides two levels of protection, the first one being the first human understandable modification element and the human understandable random element resulting of the remote procedure call. As each remote procedure call triggers a new random element, the display of a same secret image cannot be performed twice the same way and cannot be used twice. The service provider secret is then preserved.

According to a first embodiment, one random element is a unique and randomized complex document model description enclosing the unique service provider's secret image to be displayed and inserted in the element to be displayed, said document model description insuring the secret image to be displayed in different locations at each reload in the element to be displayed, such different locations being human understandable.

This invention here inserts in the page to be displayed a unique and randomized complex document model description, enclosing the service provider's secret, as involved in the service provider's security model, in a form that the remote attacker cannot predict or reuse to access this secret.

Additionally, it manages to transform the secret image into a unique object, ensuring that either the legal user or the potential attacker will be able to see it, but not both. For instance, if the legal user cannot view the captcha because the remote attacker has stolen it, he will logically reload the page to get a new one, invalidating the attacker's attempt to use the stolen secret.

This embodiment can be deployed in the form of a service installed on the backend, e.g. as an additional content generator, or transparently inserted in the page by a reverse proxy updating the original page on the fly. With the invention, while connecting to a service with a browser and making a 'View Page', the secret is not simply inserted in the page layout but embedded in a randomized part of the document. When the secret's URL has been located, when trying to retrieve the originated URL, the invention ensures that the secret's contents can only been revealed once.

In order to achieve this, a valid URL address is generated for one use only, one can use for example:
1. a tracked random number
2. user device IP address
3. user login
4. a timestamp for URL validity.

Typically a whitelist containing valid tracked random numbers is created as a database. So, when the server generates an URL, the corresponding URL tracked number is inserted in the white list.

Then, if a user tries to access an URL, the server checks this URL against the stored whitelist. If the tracked number is in the whitelist, the server serves the URL and delete the tracked number entry in the whitelist. So the next time this URL will not be available because the corresponding tracked number will not be available anymore in the whitelist. Thus points 1, 2, and 3 are used as a unique key of the URL.

In an advantageous implementation, the element to be displayed is a web page.

According to a specific feature of the invention, the complex document model description further comprises several domains, one of them being dedicated to the display of the unique secret image.

This feature, as well as the two following ones, enables to further render the attacks more complicated.

According to another specific feature, at least a part of the randomized complex document model description is obfuscated.

According to a second embodiment, one random element is a simple random operation described in the secret image as displayed to the user and to be done by the user while inputting the related one time secret, said random operation involving a user's secret designated on the secret image and the content of secret image.

A remote attacker with the ability to steal user's inputs, e.g. screen capture, shoulder surfing, etc..., cannot retrieve the full user's secret in order to use it next time as this user's secret is involved as well as the content of the secret image.

When this embodiment is combined with the first embodiment invention, this ensures that the remote attacker has no way to retrieve the real end-user's secret, typically a PIN, from all responses that could be observed or stolen.It brings an authentication method which resists to the usual PIN capture.

According to a preferred implementation, the user's secret is a PIN code.

According to a specific implementation, the simple random operation consists in a request for the user to combine a random part of the user's secret with a secret displayed on the secret image and/or the answer to a human-understandable question displayed on the secret image.

This specific implementation implies no full user's secret is disclosed while the user answers the challenge as exposed on the secret image.

According to a specific application, the acquisition device is the device on which the unique secret image is displayed.

In this application, a same device is used for the display of the secret image and for the input of the answer to the challenge corresponding to the secret image.

The invention further relates to a randomizing secret injector server implementing the method of the invention, said randomizing secret injector server being dedicated to the protection of network-based service provided by a service provider by sending a unique secret image modified using a first human understandable modification element, said unique secret image to be displayed to an end user for him to input a related one time secret on an acquisition device, said randomizing secret injector server further randomizing the unique secret image to be then sent and displayed using at least one human understandable uniquely generated random element resulting of the remote procedure call and necessary to be understood to recover the related one time secret, rendering the reloading possible but with another second human understandable element when a request is twice presented.

Such a randomizing secret injector server is deployed in the form of a service installed on the backend, e.g. as an additional content generator, or transparently inserted in the page by a reverse proxy randomizing and updating the original page on the fly.

The invention further concerns an unique secret image as obtained according to the method of the invention, said unique image being modified using a first human understandable modification element, said unique secret image to be displayed to an end user for him to input a related one time secret on an acquisition device, said unique secret image being further randomized before sending and display using at least one second human understandable uniquely generated random element resulting of the remote procedure call and necessary to be understood to recover the related one time secret, rendering the reloading possible but with another second human understandable element when a request is twice presented.

Such a secret image will be randomly displayed on a web page or will comprise random operation for the user to understand and to apply in his/her answer to the challenge.

At last the invention relates to a web page comprising a unique secret image of the invention, said web page comprising one inserted random element, said random element being a unique and randomized complex document model description enclosing the unique service provider's secret image to be displayed, said document model description insuring the secret image to be displayed in different locations at each reload in the web page to be displayed, such different locations being human understandable.

Therefore, the method according to the present invention allows reducing the risks of malicious attacks. At least, the attacks are more complex to carry out for a malicious attacker.

The present invention also relates to a device comprising means to execute the method of protecting said device against.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 represents the environment in which the invention is implemented according to a first embodiment and illustrates the functioning of the invention according to this first embodiment;
- Figure 2 represents the environment in which the invention is implemented according to a second embodiment and illustrates the functioning of the invention according to this second embodiment.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

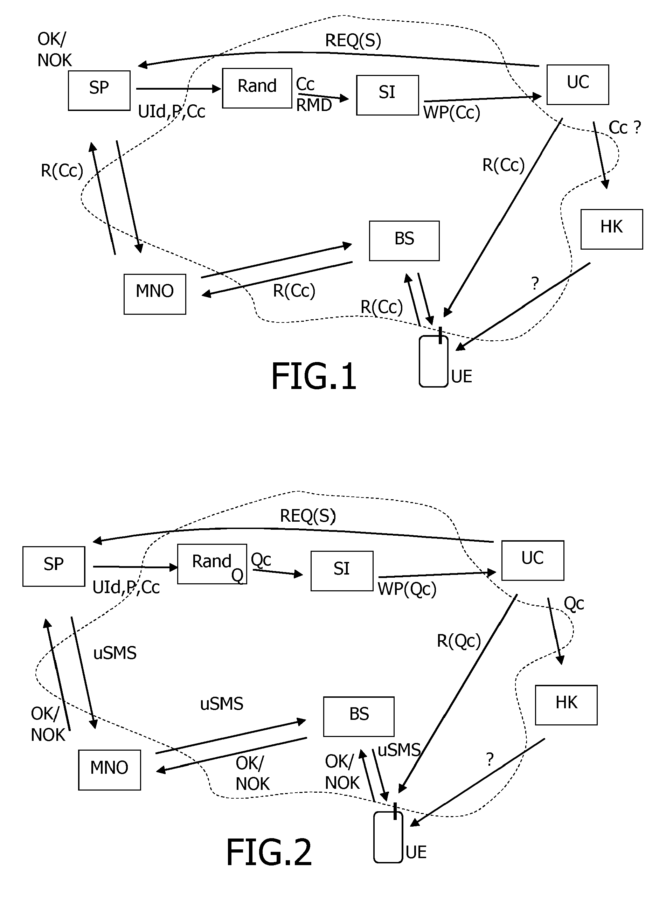

Figure 1 schematically represents the environment in which the invention is implemented and illustrates the functioning of the invention.

The invention aims in protecting network based services provided by a service provider SP, for example a bank, a webstore or any other kind of service provider. On figures, the network is illustrated by the dashed line. It can be carried by 3GPP infrastructure or web ones or any other kind of network adapted for entities to communicate.

In a protected network based service according to the invention, an user makes a request for a service REQ(S) to the service provider SP using his/her user computer UC.

In answer, the service provider SP generates a secret image Cc modified using a first human understandable modification element, typically a captcha, and transmits it with user identifier Uld and service parameters P to a randomizer Rand implemented in a server in the network. This transmission can be secured.

The randomizer Rand produces a random element used to further randomize the secret image to be displayed to the user. The random element is human understandable and is generated for each remote procedure call. The random element needs to be understood by the user to be able to correctly answer the secret image challenge by inputting the right one time secret as an answer R(Qc) on an acquisition device, for example the user computer UC or a separated mobile phone or tablet UE.

According to a first implementation illustrated on figure 1, the random element is a randomized complex document model description RMD. This description RMD randomizes the secret image position in a finally obtained element to be displayed, typically a web page WP. The user will however understand that a secret image Cc is displayed and what he/she has to do. But this renders any automatic detection and analysis of the secret image Cc more difficult. As the captcha Cc is positioned every time at different locations, a robot would have to first locate the captcha on the displayed element if ever possible and then analyze the displayed secret image.

The description RMD can further randomize machine understandable element like domains, html tag like <body>, <img>, <iframe>, http header meta data implemented in the web page and/or the URL itself. This randomization insures a single redirect and display of the element to be displayed. The randomized complex document model description RMD applied can thus further apply obfuscation scheme and encryption scheme as currently known besides.

The description RMD is used in a secret injector SI to form an element WP(Cc) to be displayed, typically a web page or an application page to be displayed on a smartphone or tablet. According to the randomized description RMD, the secret image Cc is positioned at a random location.

An automatic hacker system HK cannot locate the captcha Cc and the captcha cannot be accessed. The hacker HK is then not able to enter any challenge response in any acquisition device UE.

The user is contrarily able to visually locate the captcha and to give an answer R(Cc) to the challenge by inputting it in an acquisition device UE. The input challenge response R(Cc) is here then transferred to the service provider by SMS through a mobile communication network comprising base stations BTS and resources for sending and receiving SMS: Network, SIMcard, MSISDN of the SIMcard of the user equipment UE. Then the service provider SP checks the response and obtains an OK/NOK.

In another implementation, the challenge response can be checked by the SIM card (An applet in the SIM card) and an OK/NOK result is sent to the service provider SP by a specific SMS.

In another implementation illustrated on figure 2, the random element is a simple random operation Q combined with the secret image Cc received from the service provider SP, resulting in a question Captcha Qc, named Questcha in the following.

Once the service provider SP has generated the Quetscha, information relative to it is sent in a specific SMS uSMS to the user equipment UE in order for it to be able to check the challenge response using a user secret as inserted in the Quetscha Qc. When the user equipment UE, more specifically the SIM card, gets this uSMS, the user equipment UE shows a dialog-box, generally thanks to the SimToolKit technology, to the user and the user can fill in this dialog-box for answering the challenge as previously displayed in the Quetscha on his/her user computer UC.

The Questcha is then inserted according to a document model description which can be randomized or not by the secret injector SI. In a preferred embodiment, the randomized document model description RMD and the Questcha Qc are combined. Said random operation Q has to involve a user's secret designated on the secret image.

The simple random operation Q can be diverse. It can be a random human understandable question added on the secret image as received from the service provider and forming a challenge as the user has to answer it while inputting the captcha challenge.

Examples of such challenges are, for example:
gTb1-number of characters in your name, the answer would be gTb1-3 for a user named Jim.
Yg2H-second letter of your home city, the answer would be Yg2H-a for a user living in Paris.

All characters being further modified using a first human understandable element deforming the characters as in classical captcha.

It can also be a request for the user to combine his/her PIN, with the characters displayed on the captcha.

It is then a combination of various techniques: captcha, human-understandable question and partial secret information disclosure.

The validation of user input is thus not only based on the captcha itself, but it also involves a simple random operation and a random part of an end-user's secret. Here, even if an attacker access the Questcha, he/she will not be able to answer it as a part of the user secret is not known.

For instance, the Questcha will display a distorted text asking to combine the enclosed distorted capcha value with the first and third digits of the user's PIN at the beginning. In this case, two digits would be disclosed during each operation, and their final capture would require that the attacker steals the input questcha in order to isolate the capcha subparts from the PIN subparts.

This way, if a remote attacker is able to intercept the secret value that the end-users submits, it will be impossible to deduce the original user's PIN, blocking attempts to make Zeus-like attacks where the end-users input can be directly relayed from a hacking remote server HK. Such attacks are currently easy to do with a stolen OTP value or a stolen mobile ID PIN code. Here even if the attacker inputs the stolen Qc, he/she will not have the possibility to make a correct answer R(Qc) as he/she has no access to the PIN code and/or to the right challenge asked to the user as it changes every time.

When the right user uses the captcha displayed at randomized position or the questcha to answer the challenge, his/her answer R(Qc) is input on an acquisition device UE. The challenge response is checked by the UE's SIM card and the result OK/NOK is provided to the service provider SP by SMS..

With the second embodiment, the questcha is preferably displayed on a web page WP(Qc) or an application page on a smartphone but can also be displayed as a pop-up window for example.

In the above detailed description, reference is made to the accompanying drawings that show, by way of illustration, specific embodiments in which the invention may be practiced. In particular, the two presented embodiments can be combined in order for a quetscha Qc to be displayed according to a randomized complex document model description RMD. Indeed this combination is the preferred embodiment and this combination maximizes the properties of both embodiments. These embodiments are described in sufficient detail to enable those skilled in the art to practice the invention. The above detailed description is, therefore, not to be taken in a limiting sense, and the scope of the present invention is defined only by the appended claims, appropriately interpreted, along with the full range of equivalents to which the claims are entitled.

## Claims

1. Method to protect network-based service provided by a service provider (SP), said method comprising the step of sending a unique secret image (Cc,Qc) modified using a first human understandable modification element, said unique secret image (Cc,Qc) to be displayed to an end user for him to input a related one time secret (R(Cc),R(Qc) on an acquisition device (UE), said method comprising the preliminary step to further randomize (Rand) the unique secret image (Cc,Qc) to be sent and displayed to the user using at least one second human understandable uniquely generated random element (RMD,Q) resulting of the remote procedure call and necessary to be understood to recover the related one time secret (R(Cc),R(Qc)), rendering the reloading possible but with another second human understandable random element (RMD,Q) when a request is twice presented.

2. Method according to claim 1, wherein one random element is a unique and randomized complex document model description (RMD) enclosing the unique service provider's secret image (Cc,Qc) to be displayed and inserted in the element (WP) to be displayed, said document model description (RMD) insuring the secret image (Cc,Qc) to be displayed in different locations at each reload in the element to be displayed (WP), such different locations being human understandable.

3. Method according to claim 2, wherein the element to be displayed (WP) is a web page.

4. Method according to claim 2 or 3, wherein the complex document model description (RMD) further comprises several domains, one of them being dedicated to the display of the unique secret image (Cc,Qc).

5. Method according to one of claims 1 to 4, wherein at least a part of the randomized complex document model description (RMD) is obfuscated.

6. Method according to one of the preceding claims, wherein one random element is a simple random operation (Q) described in the secret image (Qc) as displayed to the user and to be done by the user while inputting the related one time secret (R(Qc)), said random operation (Q) involving a user's secret designated on the secret image (Qc) and the content of the secret image (Qc).

7. Method according to claim 6, wherein the user's secret is a PIN code.

8. Method according to claim 6 or 7, wherein the simple random operation consists (Q) in a request for the user to combine a random part of the user's secret with a secret displayed on the secret image (Qc) and/or the answer to a human-understandable question displayed on the secret image (Qc).

9. Method according to one of the preceding claims wherein the acquisition device is the device on which the unique secret image (Cc,Qc) is displayed.

10. Randomizing secret injector server (Rand, SI) implementing the method of one of preceding claims, said randomizing secret injector server (Rand, SI) being dedicated to the protection of network-based service provided by a service provider (SP) by sending a unique secret image (Cc,Qc) modified using a first human understandable modification element, said unique secret image (Cc,Qc) to be displayed to an end user for him to input a related one time secret (R(Cc),R(Qc)) on an acquisition device (UE), said randomizing secret injector server (Rand,SI) further randomizing the unique secret image (Cc,Qc) to be then sent and displayed using at least one human understandable uniquely generated random element (RMD,Q) resulting of the remote procedure call and necessary to be understood to recover the related one time secret (R(Cc),R(Qc)), rendering the reloading possible but with another second human understandable element (RMD,Q) when a request is twice presented.

11. Unique secret image (Cc,Qc) as obtained according to the method of one of claims 1 to 9, said unique image (Cc,Qc) being modified using a first human understandable modification element, said unique secret image (Cc,Qc) to be displayed to an end user for him to input a related one time secret (R(Cc),R(Qc)) on an acquisition device (UE), said unique secret image (Cc,Qc) being further randomized before sending and display using at least one second human understandable uniquely generated random element (RMD,Q) resulting of the remote procedure call and necessary to be understood to recover the related one time secret (R(Cc),R(Qc)), rendering the reloading possible but with another second human understandable element when a request is twice presented.

12. Web page (WP(Cc),WP(Qc)) comprising a unique secret image (Cc,Qc) as claimed in claim 11, said web page (WP) comprising one inserted random element, said random element being a unique and randomized complex document model description (RMD) enclosing the unique service provider's secret image to be displayed, said document model description (RMD) insuring the secret image (Cc,Qc) to be displayed in different locations at each reload in the web page (WP) to be displayed, such different locations being human understandable.
